# EUROPÄISCHE PATENTSCHRIFT

(11) **EP 1 641 064 B1**
(45) Veröffentlichungstag und Bekanntmachung des Hinweises auf die Patenterteilung: **27.02.2008**
(21) Anmeldenummer: 05019863.9
(22) Anmeldetag: 13.09.2005
(51) Int. Cl.: H01M 8/04, H01M 8/24

(54) **Brennstoffzellensystem**
Fuel cell system
Système de pile à combustible

(30) Priorität: 15.09.2004 DE 102004044654; 15.09.2004 US 609969 P
(43) Veröffentlichungstag der Anmeldung: 29.03.2006
(73) Patentinhaber: Airbus Deutschland GmbH, 21129 Hamburg (DE)
(72) Erfinder: Hoffjann, Claus, 21629 Neu Wulmstorf (DE); Schuldzig, Hansgeorg, 21635 Jork (DE); Heinrich, Hans-Jürgen, 22609 Hamburg (DE)
(74) Vertreter: Dilg, Andreas

(56) Entgegenhaltungen:
- DE-A1- 10 035 232
- PATENT ABSTRACTS OF JAPAN Bd. 2003, Nr. 11, 5. November 2003 (2003-11-05) & JP 2003 208917 A (NISSAN MOTOR CO LTD), 25. Juli 2003 (2003-07-25)
- PATENT ABSTRACTS OF JAPAN Bd. 2000, Nr. 21, 3. August 2001 (2001-08-03) & JP 2001 102081 A (DAIHATSU MOTOR CO LTD), 13. April 2001 (2001-04-13)

## Beschreibung

Die vorliegende Erfindung betrifft Brennstoffzellensysteme. Insbesondere betrifft die vorliegende Erfindung ein Brennstoffzellensystem zur Erzeugung von elektrischer Energie, mechanischer Energie und Wasser, die Verwendung eines solchen Brennstoffzellensystems in einem Luftfahrzeug und ein Luftfahrzeug mit einem solchen Brennstoffzellensystem.

Brennstoffzellen, insbesondere sogenannte Proton Exchange Membrane Brennstoffzellen (PEMFC), benötigen zum Betrieb u.a. einen Kompressor für die Kathodenluft und ein System zur Ableitung des auf der Kathodenseite durch die elektrochemische Reaktion erzeugten Wassers. Um eine für die Umsetzung nachteilige Übersättigung der Kathodenseite mit dem erzeugten Wasser zu vermeiden und hierdurch eine effektive Wasserproduktionsrate zu erreichen, muss das Wasser in Form von Wasserdampf und Wassertropfen kontinuierlich abgeführt werden. Zur optimalen Abführung des kathodenseitig erzeugten Wassers reicht der durch den Kompressor erzeugte Luftstrom oft nicht aus.

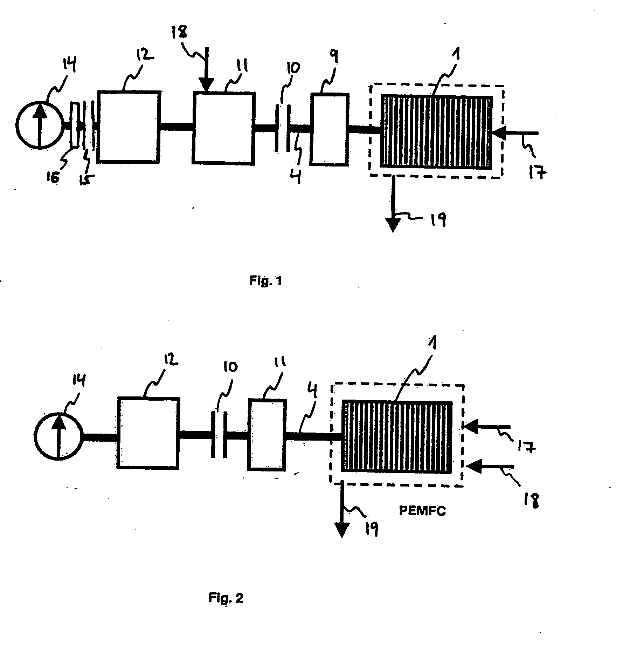

Die GB 2 128 946 A offenbart eine drehbar gelagerte Brennstoffzelle, welche durch einen Elektromotor in Rotation versetzt wird. Der Elektromotor ist über zwei miteinander gekoppelte Räder mit der Brennstoffzelle verbunden (siehe Figur 1).

Die DE 100 35 232 A1 offenbart eine Niedertemperatur-Brennstoffzelle, bei der unter Ausnutzung der Fliehkraft der Transport von Betriebsmittel der Brennstoffzelle verbessert wird. Dazu wird die rotationssymmetrisch aufgebaute Brennstoffzelle in Rotation versetzt, Die Betriebsmittel werden über die Rotationsachse zugeführt. Die Abführung von Wasser aus dem Kathodenraum erfolgt über ein nicht rotierendes äußeres Gehäuse.

Es ist eine Aufgabe der vorliegenden Erfindung, ein verbessertes Brennstoffzellensystem zur Erzeugung von elektrischer Energie, mechanischer Energie oder Wasser zur Verfügung zu stellen.

Gemäß einem Ausführungsbeispiel der vorliegenden Erfindung, wie in Anspruch 1 angegeben, wird obige Aufgabe mittels einem Brennstoffzellensystem zur Erzeugung von elektrischer Energie, mechanischer Energie und Wasser gelöst, das Brennstoffzellensystem umfassend eine drehbar gelagerte Brennstoffzelle, einen Motor und eine erste kraftschlüssige Verbindung zwischen der Brennstoffzelle und dem Motor, wobei über die erste kraftschlüssige Verbindung Energie von dem Motor auf die Brennstoffzelle übertragbar ist, so dass die Brennstoffzelle in Rotation versetzbar ist.

Die erste kraftschlüssige Verbindung zwischen Brennstoffzelle und Motor umfasst eine erste Kupplung und einen Drehmomentwandler. Vorteilhafterweise kann somit die Kraft von dem Motor auf die Brennstoffzelle dosiert übertragen werden. Beispielsweise ist hier gegebenenfalls auch ein Auskuppeln der Brennstoffzelle von dem Motor möglich, so dass beispielsweise der Motor andere Bauteile antreiben kann, ohne dabei die Brennstoffzelle anzutreiben.

Durch die Ausgestaltung des Brennstoffzellensystems kann die Brennstoffzelle derart in Rotation versetzt werden, dass eine zusätzliche Transportkraft bereit gestellt wird, welche den Wasserabtransport des durch die elektrochemische Reaktion innerhalb der Brennstoffzelle erzeugten Wassers fördert. Diese Kraft wird aus einer Zentrifugalkraft gewonnen, indem die drehbar gelagerte Brennstoffzelle in Rotation versetzt wird. Hierdurch wird der Wasserabfluss maßgeblich beschleunigt, was zu einer effektiveren Kathodenreaktion und somit zu einer Erhöhung des Wirkungsgrades der Brennstoffzelle führen kann.

Gemäß einem weiteren Ausführungsbeispiel der vorliegenden Erfindung, wie in Anspruch 2 angegeben, umfasst das Brennstoffzellensystem weiterhin einen Kompressor, wobei der Kompressor zur Bereitstellung einer Kathodenluft der Brennstoffzelle ausgeführt ist und wobei durch die Rotation der Brennstoffzelle das bei einer elektrochemischen Reaktion in der Brennstoffzelle auf einer Kathodenseite der Brennstoffzelle erzeugte Wasser durch eine Zentrifugalkraft ausschleuderbar ist.

Vorteilhafterweise wird somit ein Brennstoffzellensystem zur Verfügung gestellt, bei welchem das kathodenseitig erzeugte Wasser nicht nur mit Hilfe der Zentrifugalkraft, welche aus der Rotation des Brennstoffzellensystems oder der Brennstoffzelle resultiert, sondern auch mit Hilfe von Druckluft, welche durch den Kompressor erzeugt wird und in die Kathode der Brennstoffzelle eingeleitet wird, erfolgt. Die Addition von Zentrifugalkraft und Transportkraft (die aus der vom Kompressor erzeugten Luftströmung resultiert) beschleunigt den Wasserabfluss aus dem Kathodenraum und bewirkt somit eine effektive Kathodenreaktion.

Gemäß einem weiteren Ausführungsbeispiel der vorliegenden Erfindung, wie in Anspruch 3 angegeben, ist die erste Kupplung eine mechanische oder eine elektromechanische Kupplung.

Gemäß einem weiteren Ausführungsbeispiel der vorliegenden Erfindung, wie in Anspruch 4 angegeben, weist das Brennstoffzellensystem weiterhin einen Lastregler auf, wobei der Lastregler zur Verteilung eines Bedarfs an elektrischer Energie zwischen dem Motor und weiteren elektrischen Verbrauchern oder zur Regelung oder Steuerung des Drehmomentwandlers und der Kupplung ausgeführt ist. Die hierfür benötigte elektrische Energie wird dabei intern von der Brennstoffzelle oder von einer externen Energiequelle geliefert.

Somit kann ein elektronisches Energiemanagement gewährleistet werden, durch welches bedarfsgerecht Energie an den Motor oder andere elektrische Verbraucher bereitgestellt wird. Weiterhin kann der Lastregler den Drehmomentwandler und die Kupplung der kraftschlüssigen Verbindung zwischen der Brennstoffzelle und dem Motor steuern oder regeln, so dass hierdurch eine elektronische Drehzahlregelung der Brennstoffzelle gewährleistet ist.

Gemäß einem weiteren Ausführungsbeispiel der vorliegenden Erfindung, wie in Anspruch 5 angegeben, ist eine Drehzahl der Brennstoffzelle und damit ein Wasseraustrag aus kathodenseitigen Luftkanälen der Brennstoffzelle in Abhängigkeit von einer elektrischen oder mechanischen Last über den Lastregler und den Drehmomentwandler stetig oder intermittierend regelbar oder steuerbar.

Vorteilhafterweise ist es somit beispielsweise möglich, im Falle einer erhöhten mechanischen Last an dem Motor die Drehzahl der Brennstoffzelle herabzuregeln, so dass der Energiebedarf des Motors entsprechend sinkt.

Gemäß einem weiteren Ausführungsbeispiel der vorliegenden Erfindung, wie in Anspruch 6 angegeben, ist eine Drehzahl des Kompressors in Abhängigkeit von einer elektrischen oder mechanischen Last über den Lastregler und den Drehmomentwandler stetig oder intermittierend regelbar oder steuerbar, wobei eine Drehzahl der Brennstoffzelle unabhängig von der elektrischen oder mechanischen Last über den Lastregler und den Drehmomentwandler stetig oder intermittierend regelbar oder steuerbar ist.

Somit können Drehzahl von Kompressor und Brennstoffzelle unabhängig voneinander eingestellt werden, wobei sich die Drehzahl des Kompressors an der elektrischen oder mechanischen Last orientiert und wobei sich die Drehzahl der Brennstoffzelle unabhängig davon einstellen oder regeln lässt.

Gemäß einem weiteren Ausführungsbeispiel der vorliegenden Erfindung, wie in Anspruch 7 angegeben, umfasst das Brennstoffzellensystem weiterhin eine Wasserpumpe und eine zweite kraftschlüssige Verbindung zwischen dem Motor und der Wasserpumpe, wobei über die zweite kraftschlüssige Verbindung Energie von dem Motor auf die Wasserpumpe übertragbar ist, so dass die Wasserpumpe in Rotation versetzbar ist und wobei die Wasserpumpe ein Kondensat aus einer Kathodenabluft der Brennstoffzelle zur weiteren Nutzung der Brennstoffzelle zurückführt oder von dem Brennstoffzellensystem abführt.

Vorteilhafterweise wird somit ein Brennstoffzellensystem angegeben, welches die abgeschleuderte Kathodenluft selbstständig abführen kann oder gegebenenfalls auch zur weiteren Nutzung innerhalb der Brennstoffzelle der Brennstoffzelle zurückführen kann.

Gemäß einem weiteren Ausführungsbeispiel der vorliegenden Erfindung, wie in Anspruch 8 angegeben, umfasst das Brennstoffzellensystem weiterhin eine Welle, welche kraftschlüssig mit einem Anker des Motors oder einem Verdränger des Kompressors verbunden ist.

Gemäß einem weiteren Ausführungsbeispiel der vorliegenden Erfindung, wie in Anspruch 9 angegeben, ist die Brennstoffzelle aus rotationssymmetrischen Bauteilen als Hohlzylinder aufgebaut.

Vorteilhafterweise ist dadurch eine Laufruhe und geringe mechanische Belastung beispielsweise der Welle bei Rotation der Brennstoffzelle um ihre Längsachse gewährleistet.

Gemäß einem weiteren Ausführungsbeispiel der vorliegenden Erfindung, wie in Anspruch 10 angegeben, ist die Welle im Bereich der Brennstoffzelle als erste Hohlwelle ausgebildet, wobei die erste Hohlwelle zur Zuleitung von Wasserstoff zu einer Anode der Brennstoffzelle ausgebildet ist.

Somit kann auch bei Rotation der Brennstoffzelle um ihre Rotationsachse der Brennstoffzellenanode auf einfache Art und Weise Wasserstoff zugeführt werden.

Gemäß einem weiteren Ausführungsbeispiel der vorliegenden Erfindung, wie in Anspruch 11 angegeben, ist eine zweite Hohlwelle vorgesehen, welche die erste Hohlwelle umschließt, wobei die zweite Hohlwelle zur Zuleitung von Luft zu der Brennstoffzelle ausgebildet ist.

Somit können verschiedene Gase unabhängig voneinander der Brennstoffzelle zugeführt werden.

Gemäß einem weiteren Ausführungsbeispiel der vorliegenden Erfindung, wie in Anspruch 12 angegeben, weist die Brennstoffzelle kathodenseitige Luftkanäle und anodenseitige Gaskanäle auf, wobei die Luftkanäle radial oder spiralförmig von innen nach außen verlaufend angeordnet sind und wobei die Anordnung der Gaskanäle der Anordnung der Luftkanäle entspricht.

Vorteilhafterweise kann somit der Wasserabfluss aus dem Kathodenraum weiter gesteigert werden.

Gemäß einem weiteren Ausführungsbeispiel der vorliegenden Erfindung, wie in Anspruch 13 angegeben, weist die Brennstoffzelle einen Sammelraum für Wasser und ein den Sammelraum umgebendes Gehäuse auf, wobei das Gehäuse Lagerelemente für die Wellen und Drehdurchführungen aufnimmt.

Vorteilhafterweise kann somit das aus der Kathode entfernte Wasser innerhalb der Brennstoffzelle gesammelt werden.

Weitere Aufgaben, Ausführungsformen und Vorteile der Erfindung finden sich auf den Unteransprüchen und den weiteren unabhängigen Ansprüchen.

Im folgenden wird die Erfindung anhand von Ausführungsbeispielen unter Bezugnahme auf die Zeichnungen näher beschrieben.

Fig. 1 zeigt eine schematische Darstellung eines Brennstoffzellensystems gemäß einem Ausführungsbeispiel der vorliegenden Erfindung.

Fig. 2 zeigt eine schematische Darstellung eines weiteren Brennstoffzellensystems gemäß einem anderen Ausführungsbeispiel der vorliegenden Erfindung.

Fig. 3 zeigt eine schematische Querschnittsdarstellung einer Bipolarplatte gemäß einem Ausführungsbeispiel der vorliegenden Erfindung.

Fig. 4 zeigt eine schematische Schnittdarstellung eines Brennstoffzellensystems gemäß einem Ausführungsbeispiel der vorliegenden Erfindung.

In der folgenden Figurenbeschreibung werden für die gleichen oder ähnlichen Elemente die gleichen Bezugsziffern verwendet.

Fig. 1 zeigt eine erste schematische Darstellung eines Brennstoffzellensystems gemäß einem Ausführungsbeispiel der vorliegenden Erfindung. Wie Fig. 1 zu entnehmen ist, weist das Brennstoffzellensystem eine Proton Exchange Membrane Brennstoffzelle (PEMFC) 1, einen Elektromotor 12, einen Kompressor 11, eine Kupplung 10, einen Drehmomentwandler 9 und eine Pumpe 14 auf.

Der Brennstoffzelle 1 wird über eine entsprechende Leitung Wasserstoff 17 zugeleitet und über eine entsprechende andere Leitung feuchte Luft 19 abgeführt. Die Zuleitung des Wasserstoffs 17 erfolgt hierbei über eine Hohlwelle (nicht dargestellt in Fig. 1), welche einen Teil der Hauptwelle 4 bildet. Der Wasserstoff wird sodann einer Anode (nicht gezeigt in Fig. 1) der Brennstoffzelle 1 zugeführt, so dass eine elektrochemische Reaktion innerhalb der Brennstoffzelle stattfinden kann, durch welche elektrische Energie und Wasser erzeugt wird.

Das Wasser, was sich in der Kathode der Brennstoffzelle 1 lagert, wird der Kathode abgeführt und als feuchte Luft 19 oder Wasser entfernt.

Die Brennstoffzelle 1 ist hierbei drehbar auf der Welle 4 gelagert und über die Kupplung 10 und den Drehmomentwandler 9 mit dem Elektromotor 12 kraftschlüssig verbunden. Weiterhin kann die Brennstoffzelle 1 mit Hilfe des Elektromotors 12 in Drehbewegung versetzt werden. Diese Drehbewegung führt erfindungsgemäß zu einer erhöhten Abführung des Wassers von dem Kathodensystem der Brennstoffzelle 1, welche durch die erzeugte Zentrifugalkraft bedingt ist, und somit zu einem erhöhten Wirkungsgrad der Brennstoffzelle.

Wie in Fig. 1 zu erkennen, umfasst das Brennstoffzellensystem weiterhin eine Pumpe 14, welche über eine zweite kraftschlüssige Verbindung, die aus einer zweiten Kupplung 15 und einem zweiten Drehmomentwandler 16 besteht, mit der Welle 4 verbunden ist und somit über dem Elektromotor 12 antreibbar ist. Die Wasserpumpe 14 kann beispielsweise dazu verwendet werden, ein Kondensat aus der Kathodenabluft 19 an die Brennstoffzelle 1 zurückzuführen, so dass esy innerhalb der Brennstoffzelle weiter verwendet werden kann. Natürlich kann die Pumpe 14 aber auch dazu verwendet werden, das Kondensat aus der feuchten Luft 19 gänzlich von dem Brennstoffzellensystem abzuführen. Nachfolgend kann das Kondensat dann beispielsweise dem Wasserversorgungssystem eines Luftfahrzeugs, in welches das Brennstoffzellensystem eingebaut ist, zugeführt werden.

Der Elektromotor 12 weist einen Anker auf (nicht dargestellt in Fig. 1) und der Kompressor 11 weist einen Verdränger auf (nicht dargestellt in Fig. 1). Sowohl Verdränger als auch Anker sind kraftschlüssig mit der Welle 4 verbunden.

Um die mechanische Beanspruchung der rotierenden Teile zu minimieren, ist die Brennstoffzelle 1 aus rotationssymmetrischen Bauteilen als Hohlzylinder aufgebaut.

Weiterhin weist die Brennstoffzelle 1 kathodenseitige Luftkanäle und anodenseitige Gaskanäle auf, welche radial oder spiralförmig von innen nach außen verlaufend angeordnet sind. Hierdurch kann der Wirkungsgrad der Brennstoffzelle weiter gesteigert werden.

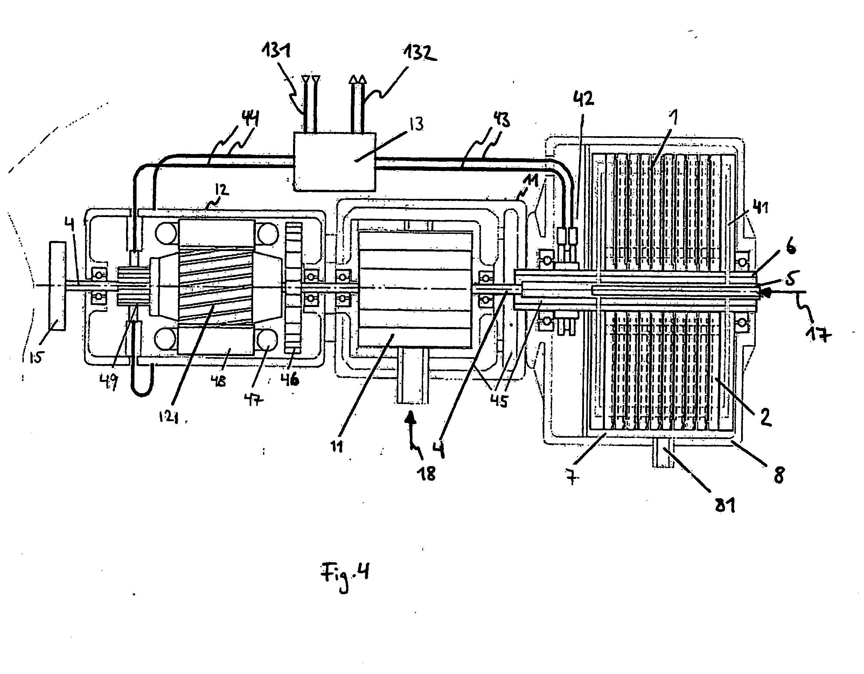

Fig. 2 zeigt eine zweite schematische Darstellung eines Brennstoffzellensystems gemäß einem anderen Ausführungsbeispiel der vorliegenden Erfindung. Hierbei ist die Brennstoffzelle 1 derart ausgeführt, dass ihr über eine erste Hohlwelle (siehe Fig. 4) Wasserstoffgas 17 zugeleitet werden kann und dass ihr über eine zweite Hohlwelle (siehe Fig. 4) Luft 18 zugeleitet werden kann.

Ein Kompressor ist in dem in Fig. 2 dargestellten Brennstoffzellensystem nicht vorgesehen.

Zwischen dem Elektromotor 12 und der Brennstoffzelle 1 befindet sich eine mechanische oder elektromechanische Kupplung 10 und ein Drehmomentwandler oder Getriebe 9.

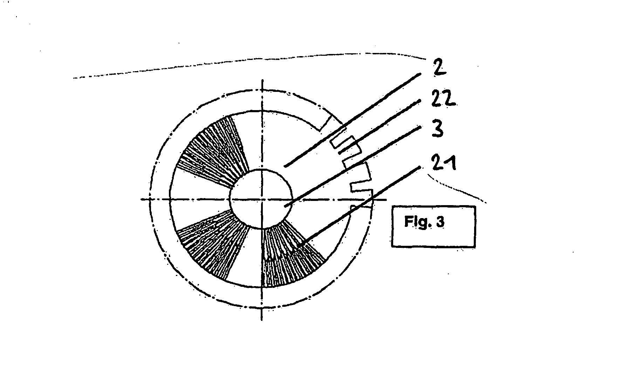

Fig. 3 zeigt eine schematische Querschnittsdarstellung einer Bipolarplatte gemäß einem Ausführungsbeispiel der vorliegenden Erfindung. Wie in Fig. 3 zu erkennen ist, weist die Bipolarplatte 2 Kathodenluftkanäle 21 auf. Weiterhin ist die Bipolarplatte 2 in radialer Richtung kühllamellenartig oder schaufelartig ausgebildet. Die Kühllamellen oder Schaufeln 22 sind hierbei zur Kühlung der Brennstoffzelle verwendbar. Die Brennstoffzelle ist zusammen mit den Bipolarplatten 2 in ihrem Gehäuse (siehe Fig. 4) drehbar gelagert. Das Gehäuse weist hierbei einen Einströmkanal und einen Ausströmkanal für Kühlluft auf. Die drehbare Lagerung der Bipolarplatten 12 folgt hierbei im Bereich der Zentralbohrung 3.

Gemäß einem Ausführungsbeispiel der vorliegenden Erfindung ist das Gehäuse als Axialgebläse ausgebildet.

Fig. 4 zeigt eine schematische Schnittdarstellung eines Brennstoffzellensystems gemäß einem Ausführungsbeispiel der vorliegenden Erfindung. Die PEMFC 1 ist aus rotationssymmetrischen Bauteilen als Hohlzylinder aufgebaut. In der Zentralbohrung 3 (siehe Fig. 3) der Bipolarplatten 2 befindet sich eine durchgehende Welle 4, welche mit dem Verdränger 111, bei dem es sich beispielsweise um einen Kolben oder Drehschieber handelt, des Kompressors 11 und dem Anker 121 des Elektromotors 12 fest verbunden ist. Natürlich kann, entsprechend einem anderen Ausführungsbeispiel der vorliegenden Erfindung, der Kompressor 11 auch entfallen.

Im Bereich der Brennstoffzelle 1 ist die Welle 4 als Hohlwelle 5 ausgeführt. Über diese Hohlwelle 5 fließt der Wasserstoff 17 zur Anode der Brennstoffzelle 1. Eine weitere Hohlwelle 6 umschließt die Hohlwelle 5 für die Luftzufuhr. Über Drehdurchführungen werden an der freien Seite der Brennstoffzelle 1 der Wasserstoff 17 zugeführt. Im Falle, dass kein Kompressor 11 vorhanden ist, wird über die Drehdurchführungen an der freien Seite der Brennstoffzelle 1 auch die Luft zugeführt.

Bei Rotation der Brennstoffzelle 1 um die Welle 4 wird das bei der elektrochemischen Reaktion auf der Kathodenseite erzeugte Wasser durch die Zentrifugalkraft in den Sammelraum 7 ausgeschleudert. Die kathodenseitigen Luftkanäle 21 in der Bipolarplatte 2 sind hierfür radial ausgerichtet (siehe Fig. 3). Der Sammelraum 7 ist von einem Gehäuse 8 umgeben, welches die Lageelemente für die Wellen (4, 5, 6) und die Drehdurchführungen aufnimmt. Die Rotationsachse 4 und die Hohlwellen 5, 6 der Brennstoffzelle bzw. des Brennstoffzellensystems sind in dem Gehäuse 8 gelagert, damit in den die Brennstoffzelle 1 umgebenden Raum das Kathodenwasser gesammelt und über eine Öffnung 81 abgeführt werden kann. Es ist aber auch möglich, dass die Rotationsachse 4 und die Hohlwellen 5, 6 der Brennstoffzelle 1 nicht in einem Gehäuse 8 gelagert sind, damit das Kathodenwasser in den die Brennstoffzelle 1 umgebenden freien Raum abgeführt werden kann.

Der Antrieb für die Rotation der Brennstoffzelle 1 erfolgt durch den mit der Welle 4 kraftschlüssig verbundenen Elektromotor 12. Zwischen dem Elektromotor 12 und der Brennstoffzelle 1 kann sich eine mechanische oder elektromagnetische Kupplung und ein Drehmomentwandler (Getriebe) befinden.

Die Endplatte 41 der Brennstoffzelle 1 kann mit Gaskanälen ausgestattet sein.

Innerhalb der Hohlwellen 5, 6 und des Kompressors 11 befindet sich ein Luftraum 45, welcher entsprechende Gase aufnehmen kann.

Die Kupplung 10 und der Drehmomentwandler 9 (dargestellt in Fig. 1) sind so konstruiert, dass der Luftstrom vom Kompressor 11 auch im ausgekuppelten Zustand über die Hohlwelle 6 zur Brennstoffzelle 1 fließen kann. Die erforderliche elektrische Energie für den Elektromotor 12 wird von der Brennstoffzelle 1 geliefert.

Der Elektromotor 12 umfasst einen Lüfter 46, eine Erregerwicklung 47, Ständer 48 und Stromwender 49.

Über Kupplung 15 kann eine mechanische Energie an weitere (mechanische) Verbraucher, wie zum Beispiel eine Pumpe, übertragen werden.

Über den elektrischen Lastregler 13 wird die Verteilung des elektrischen Energiebedarfs zwischen dem Elektromotor 12 (über Leitungen 44) und den externen elektrischen Verbrauchern und der Schaltungszustand des Drehmomentwandlers 9 der Kupplung 10 (siehe Fig. 1) geregelt. Über den Lastregler 13 kann auch externe elektrische Energie für andere Betriebszustände, z.B. für das Anfahren des Systems, dem Elektromotor 12 zugeführt werden. Die externe elektrische Energie wird dem Lastregler 13 über Zuleitungen 131 zugeführt. Die interne (von der Brennstoffzelle 1 erzeugte) elektrische Energie wird dem Lastregler 13 über Stromabnehmer 42 und Leitungen 43 zugeführt. Die elektrische Energie für weitere elektrische Verbraucher wird dem Lastregler über Ableitungen 132 abgeführt.

Das im Sammelraum 7 anfallende Wasser und die feuchte Luft aus den Kathodenkanälen 21 werden über eine Öffnung 81 im Gehäuse 8 beispielsweise über einen Kondensator mit Kondensatabscheider oder über einen Feuchte-Wärme-Tauscher (nicht dargestellt in Fig. 4) für eine weitere Nutzung im Prozess abgeleitet.

Die Kühlung der PEMFC 1 erfolgt über die Bipolarplatten oder Kühlplatten der Brennstoffzelle 1, die in radialer Richtung soweit vergrößert sind, dass die überstehenden Kreisringe als Kühllamellen oder als Schaufeln 22 ausgebildet sind (siehe Fig. 3).

Das erfindungsgemäße Brennstoffzellensystem kann beispielsweise innerhalb eines Luftfahrzeuges Verwendung finden.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Brennstoffzellensystem zur Erzeugung von elektrischer Energie, mechanischer Energie und Wasser, das Brennstoffzellensystem umfassend:
eine drehbar gelagerte Brennstoffzelle (1);
einen Motor (12); und
eine erste kraftschlüssige Verbindung (9, 10) zwischen der Brennstoffzelle (1) und dem Motor (12);
wobei über die erste kraftschlüssige Verbindung (9, 10) Energie von dem Motor (12) auf die Brennstoffzelle (1) übertragbar ist, so dass die Brennstoffzelle (1) in Rotation versetzbar ist und
wobei die erste kraftschlüssige Verbindung (9, 10) zwischen Brennstoffzelle (1) und Motor (12) eine erste Kupplung (10) und einen Drehmomentwandler (9) umfasst.

2. Brennstoffzellensystem nach Anspruch 1, weiterhin umfassend:
einen Kompressor (11);
wobei der Kompressor zur Bereitstellung einer Kathodenluft der Brennstoffzelle (1) ausgeführt ist; und
wobei durch die Rotation der Brennstoffzelle (1) das bei einer elektrochemischen Reaktion in der Brennstoffzelle (1) auf einer Kathodenseite der Brennstoffzelle (1) erzeugte Wasser durch eine Zentrifugalkraft ausschleuderbar ist.

3. Brennstoffzellensystem nach Anspruch 1 oder 2,
wobei die erste Kupplung (10) eine mechanische oder elektromechanische Kupplung (10) ist.

4. Brennstoffzellensystem nach Anspruch 3,
wobei weiterhin ein Lastregler (13) vorgesehen ist;
wobei der Lastregler (13) zur Verteilung eines Bedarfs an elektrischer Energie zwischen dem Motor (12) und weiteren elektrischen Verbrauchern oder zur Regelung oder Steuerung des Drehmomentwandlers (9) und der Kupplung (10) ausgeführt ist; und
wobei die elektrische Energie hierbei intern von der Brennstoffzelle (1) oder von einer externen Energiequelle, welche an den Lastregler (13) angeschlossen ist, lieferbar ist.

5. Brennstoffzellensystem nach Anspruch 4,
wobei eine Drehzahl der Brennstoffzelle (1) und damit ein Wasseraustrag aus kathodenseitigen Luftkanälen (21) der Brennstoffzelle (1) in Abhängigkeit von einer elektrischen oder mechanischen Last über den Lastregler (13) und den Drehmomentwandler (9) stetig oder intermittierend regelbar oder steuerbar ist.

6. Brennstoffzellensystem nach einem der Ansprüche 2 bis 5,
wobei eine Drehzahl des Kompressors (11) in Abhängigkeit von einer elektrischen oder mechanischen Last über den Lastregler (13) und den Drehmomentwandler (9) stetig oder intermittierend regelbar oder steuerbar ist; und
wobei eine Drehzahl der Brennstoffzelle (1) unabhängig von der elektrischen oder mechanischen Last über den Lastregler (13) und den Drehmomentwandler (9) stetig oder intermittierend regelbar oder steuerbar ist.

7. Brennstoffzellensystem nach einem der Ansprüche 2 bis 6, weiterhin umfassend:
eine Wasserpumpe (14); und
eine zweite kraftschlüssige Verbindung (15) zwischen dem Motor (12) und der Wasserpumpe (14);
wobei über die zweite kraftschlüssige Verbindung (15) Energie von dem Motor (12) auf die Wasserpumpe (14) übertragbar ist, so dass die Wasserpumpe (14) antreibbar ist; und
wobei die Wasserpumpe (14) ein Kondensat aus einer Kathodenabluft der Brennstoffzelle (1) zur weiteren Nutzung der Brennstoffzelle (1) zurückführt oder von dem Brennstoffzellensystem abführt.

8. Brennstoffzellensystem nach einem der vorhergehenden Ansprüche, weiterhin umfassend:
eine Welle (4);
wobei ein Anker (121) des Motors (12) oder ein Verdränger (111) des Kompressors kraftschlüssig mit der Welle verbunden ist.

9. Brennstoffzellensystem nach einem der vorhergehenden Ansprüche,
wobei die Brennstoffzelle (1) aus rotationssymmetrischen Bauteilen als Hohlzylinder aufgebaut ist.

10. Brennstoffzellensystem nach einem der Ansprüche 8 oder 9,
wobei die Welle (4) im Bereich der Brennstoffzelle (1) als erste Hohlwelle (5) ausgebildet ist; und
wobei die erste Hohlwelle (5) zur Zuleitung von Wasserstoff zu einer Anode der Brennstoffzelle (1) ausgebildet ist.

11. Brennstoffzellensystem nach Anspruch 10,
wobei eine zweite Hohlwelle (6) vorgesehen ist, welche die erste Hohlwelle (5) umschließt; und
wobei die zweite Hohlwelle (6) zur Zuleitung von Luft zu der Brennstoffzelle (1) ausgebildet ist.

12. Brennstoffzellensystem nach einem der vorhergehenden Ansprüche,
wobei die Brennstoffzelle (1) kathodenseitige Luftkanäle (21) und anodenseitige Gaskanäle aufweist;
wobei die Luftkanäle (21) radial oder spiralförmig von innen nach außen verlaufend angeordnet sind; und
wobei die Anordnung der Gaskanäle der Anordnung der Luftkanäle (21) entspricht.

13. Brennstoffzellensystem nach einem der Ansprüche 8 bis 12,
wobei die Brennstoffzelle (1) einen Sammelraum (7) für Wasser und ein den Sammelraum (7) umgebendes Gehäuse (8) aufweist; und
wobei das Gehäuse (8) Lagerelemente für die Wellen (4, 5, 6) und Drehdurchführungen aufnimmt.

14. Brennstoffzellensystem nach einem der vorhergehenden Ansprüche,
wobei Bipolarplatten (2) oder Kühlplatten der Brennstoffzelle (1) in radialer Richtung als Kühllamellen oder Schaufeln (22) ausgebildet sind; und
wobei die Kühllamellen oder Schaufeln (22) zur Kühlung der Brennstoffzelle (1) verwendbar sind.

15. Brennstoffzellensystem nach Anspruch 14,
wobei die Brennstoffzelle (1) zusammen mit den Bipolarplatten (2) oder den Kühlplatten in dem Gehäuse (8) drehbar gelagert sind.

16. Brennstoffzellensystem nach Anspruch 14 oder 15,
wobei das Gehäuse (8) einen Einströmkanal und einen Ausströmkanal für Kühlluft aufweist.

17. Brennstoffzellensystem nach Anspruch 16,
wobei das Gehäuse (8) als Axialgebläse ausgebildet ist.

18. Brennstoffzellensystem nach einem der vorhergehenden Ansprüche,
wobei die Brennstoffzelle (1) eine Proton Exchange Membrane Brennstoffzelle ist.

19. Verwendung eines Brennstoffzellensystems nach einem der Ansprüche 1 bis 18 in einem Luftfahrzeug.

20. Luftfahrzeug mit einem Brennstoffzellensystem nach einem der Ansprüche 1 bis 18.

## Claims

1. A fuel cell system for generating electrical energy, mechanical energy and water, with the fuel cell system comprising:
a rotatably mounted fuel cell (1);
a motor (12); and
a first non-positive connection (9, 10) between the fuel cell (1) and the motor (12);
wherein, by way of the first non-positive connection (1), energy can be transmitted from the motor (12) to the fuel cell (1) so that the fuel cell (1) can be made to rotate and
wherein the first non-positive connection (9, 10) between the fuel cell (1) and the motor (12) comprises a first clutch (10) and a torque converter (9).

2. Fuel cell system according to claim 1, further comprising:
a compressor (11);
wherein the compressor is designed to provide cathode air to the fuel cell (1); and
wherein, as a result of the rotation of the fuel cell (1) the water generated in an electrochemical reaction in the fuel cell (1) on a cathode side of the fuel cell (1) can be extracted by centrifugal force.

3. Fuel cell system according to claim 1 or 2,
wherein the first clutch (1) is a mechanical or electromechanical clutch (10).

4. Fuel cell system according to claim 3,
wherein furthermore a load controller (13) is provided;
wherein the load controller (13) is designed to distribute the required electrical energy between the motor (12) and further electrical consumers, or is designed to control or regulate the torque converter (9) and the clutch (10); and
wherein the electrical energy required for this can be supplied internally by the fuel cell (1) or by an external energy source, which is connected to the load controller (13).

5. Fuel cell system according to claim 4,
wherein a rotary speed of the fuel cell (1) and thus a water discharge from the cathode-side air channels (21) of the fuel cell (1) can be regulated or controlled, either permanently or intermittently, by way of the load controller (13) and the torque converter (9), depending on an electrical or mechanical load.

6. Fuel cell system according to any one of claims 2 to 5,
wherein a rotary speed of the compressor (11) can be regulated or controlled, either permanently or intermittently, by way of the load controller (13) and the torque converter (9), depending on an electrical or mechanical load; and
wherein a rotary speed of the fuel cell (1) can be regulated or controlled, either permanently or intermittently, by way of the load controller (13) and the torque converter (9), independently of the electrical or mechanical load.

7. Fuel cell system according to any one of claims 2 to 6, further comprising:
a water pump (14); and
a second non-positive connection (15) between the motor (12) and the water pump (14);
wherein, by way of the second non-positive connection (15), energy from the motor (12) can be transmitted to the water pump (14) so that the water pump can be driven; and
wherein the water pump (14) returns a condensate from the cathode exhaust air of the fuel cell (1) for further utilisation by the fuel cell (1), or removes it from the fuel cell system.

8. Fuel cell system according to any one of the preceding claims, further comprising:
a shaft (4);
wherein an armature (121) of the motor (12) or a displacement device (111) of the compressor is non-positively connected to the shaft.

9. Fuel cell system according to any one of the preceding claims,
wherein the fuel cell (1) is constructed from rotation-symmetrical components as a hollow cylinder.

10. Fuel cell system according to claim 8 or 9,
wherein, in the region of the fuel cell (1), the shaft (4) is formed as a first hollow shaft (5); and
wherein the first hollow shaft (5) is designed to feed hydrogen to an anode of the fuel cell (1).

11. Fuel cell system according to claim 10,
wherein a second hollow shaft (6) is provided which encloses the first hollow shaft (5); and
wherein the second hollow shaft (6) is designed for feeding air to the fuel cell (1).

12. Fuel cell system according to any one of the preceding claims,
wherein the fuel cell (1) comprises air channels (21) on the cathode side and gas channels on the anode side;
wherein the air channels (21) are arranged so as to extend radially or in a spiral shape from the inside towards the outside; and
wherein the arrangement of the gas channels corresponds to the arrangement of the air channels (21).

13. Fuel cell system according to any one of claims 8 to 12,
wherein the fuel cell (1) comprises a collection space (7) for water, and a housing (8) which encloses the collection space (7); and
wherein the housing (8) accommodates bearing elements for the shafts (4, 5, 6) and rotary transmission leadthroughs.

14. Fuel cell system according to any one of the preceding claims,
wherein bipolar plates (2) or fuel cell (1) cooling plates are designed in a radial direction as cooling lamellae or blades (22); and
wherein the cooling lamellae or blades (22) can be used for cooling the fuel cell (1).

15. Fuel cell system according to claim 14,
wherein the fuel cell (1), together with the bipolar plates (2) or the cooling plates, are mounted rotatably in the housing.

16. Fuel cell system according to claim 14 or 15,
wherein the housing (8) comprises an inflow channel and an outflow channel for cooling air.

17. Fuel cell system according to claim 16,
wherein the housing (8) is formed as an axial blower.

18. Fuel cell system according to any one of the preceding claims,
wherein the fuel cell (1) is a proton exchange membrane fuel cell.

19. Use of a fuel cell system according to any one of claims 1 to 18 in an aircraft.

20. Aircraft with a fuel cell system according to any one of claims 1 to 18.

## Revendications

1. Système à pile à combustible destiné à produire de l'énergie électrique, de l'énergie mécanique et de l'eau, ledit système à pile à combustible comprenant :
une pile à combustible (1) disposée de façon à permettre un mouvement rotatif ;
un moteur (12) ; et
une première liaison par adhérence (9, 10) entre la pile à combustible (1) et le moteur (12) ;
dans lequel la première liaison par adhérence (9, 10) est capable de transmettre de l'énergie du moteur (12) à la pile à combustible (1), entraînant ainsi la pile à combustible (1) dans un mouvement de rotation, et
et dans lequel la première liaison par adhérence (9, 10) entre la pile à combustible (1) et le moteur (12) comprend un premier embrayage (10) et un convertisseur de couple (9).

2. Système à pile à combustible selon la revendication 1, comprenant en outre :
un compresseur (11) ;
ledit compresseur étant disposé de manière à ce qu'il puisse alimenter en air un côté cathode de la pile à combustible (1) ; et
l'eau produite sur un côté cathode de la pile à combustible (1) par une réaction électrochimique dans la pile à combustible (1) pouvant être essorée par l'effet d'une force centrifuge générée par la rotation de la pile à combustible (1).

3. Système à pile à combustible selon les revendications 1 ou 2, dans lequel
le premier embrayage (10) est un embrayage mécanique ou électromécanique (10).

4. Système à pile à combustible selon la revendication 3, dans lequel ledit système est, en outre, pourvu d'un régulateur de charge (13) ;
le régulateur de charge (13) étant réalisé de manière à distribuer un besoin en énergie électrique entre le moteur (12) et d'autres récepteurs électriques ou à réguler ou commander le convertisseur de couple (9) et l'embrayage (10) ; et
l'énergie électrique requise à cet effet pouvant être fournie en interne par la pile à combustible (1) ou par une source d'énergie externe, cette dernière étant reliée au régulateur de charge (13).

5. Système à pile à combustible selon la revendication 4,
dans lequel le nombre de tours de la pile à combustible (1), et donc le rendement d'un essorage à travers les conduits d'air (21) sur le côté cathode de la pile à combustible (1), peut être réglé ou commandé, de façon permanente ou intermittente, par le régulateur de charge (13) et le convertisseur de couple (9), ledit réglage étant fonction d'une charge électrique ou mécanique.

6. Système à pile à combustible selon l'une quelconque des revendications 2 à 5,
dans lequel le nombre de tours du compresseur (11) peut être réglé ou commandé, de façon permanente ou intermittente, par le régulateur de charge (13) et le convertisseur de couple (9), ledit réglage étant fonction d'une charge électrique ou mécanique, et
dans lequel le nombre de tours de la pile à combustible (1) peut être réglé ou commandé, de façon permanente ou intermittente, par le régulateur de charge (13) et le convertisseur de couple (9), ledit réglage étant indépendant de la charge électrique ou mécanique.

7. Système à pile à combustible selon l'une quelconque des revendications 2 à 6, comprenant en outre :
une pompe à eau (14) ; et
une deuxième liaison par adhérence (15) entre le moteur (12) et la pompe à eau (14) ;
dans lequel la deuxième liaison par adhérence (15) permet de transmettre de l'énergie du moteur (12) à la pompe à eau (14), permettant ainsi de faire fonctionner la pompe à eau (14) ; et
dans lequel la pompe à eau (14) sert soit à recycler un condensat issu d'un effluent cathodique de la pile à combustible (1) vers la pile à combustible (1) pour une utilisation ultérieure soit à l'évacuer vers l'extérieur du système à pile à combustible.

8. Système à pile à combustible selon l'une quelconque des revendications précédentes, comprenant en outre :
un arbre (4) ;
un induit (121) du moteur (12) ou un piston de déplacement (111) du compresseur étant relié à l'arbre par adhérence.

9. Système à pile à combustible selon l'une quelconque des revendications précédentes,
dans lequel la pile à combustible (1) est assemblée à partir de pièces à symétrie de révolution pour former un cylindre creux.

10. Système à pile à combustible selon l'une quelconque des revendications 8 ou 9,
l'arbre (4) étant réalisé de manière à former, dans la zone de la pile à combustible (1), un premier arbre creux (5) ; et
le premier arbre creux (5) étant réalisé de manière à permettre d'alimenter une anode de la pile à combustible (1) en hydrogène.

11. Système à pile à combustible selon la revendication 10,
ledit système étant pourvu d'un deuxième arbre creux (6) entourant le premier arbre creux (5) ; et
le deuxième arbre creux (6) étant réalisé de manière à permettre d'alimenter la pile à combustible (1) en air.

12. Système à pile à combustible selon l'une quelconque des revendications précédentes,
la pile à combustible (1) étant pourvue de conduits d'air (21) sur le côté cathode et de conduits de gaz sur le côté anode ;
les conduits d'air (21) étant orientés de l'intérieur vers l'extérieur en disposition radiale ou hélicoïdale ; et
la disposition des conduits de gaz correspondant à la disposition des conduits d'air (21).

13. Système à pile à combustible selon l'une quelconque des revendications 8 à 12,
la pile à combustible (1) étant pourvue d'un réservoir (7) destiné à recueillir de l'eau ainsi que d'un boîtier (8) qui entoure le réservoir (7) ; et
le boîtier (8) étant destiné à accueillir des éléments de palier pour les arbres (4, 5, 6) et des passages tournants.

14. Système à pile à combustible selon l'une quelconque des revendications précédentes,
la pile à combustible (1) étant pourvue de plaques bipolaires (2) ou plaques de refroidissement, lesdites plaques étant réalisées sous forme d'ailettes de refroidissement ou de pales (22) ; et
les ailettes de refroidissement ou les pales (22) pouvant être utilisées pour refroidir la pile à combustible (1).

15. Système à pile à combustible selon la revendication 14,
la pile à combustible (1) formant un ensemble avec les plaques bipolaires (2) ou les plaques de refroidissement, ledit ensemble étant disposé au sein du boîtier (8) de manière à permettre un mouvement rotatif.

16. Système à pile à combustible selon les revendications 14 ou 15,
le boîtier (8) étant pourvu d'un conduit d'entrée et d'un conduit de sortie destinés à l'air de refroidissement.

17. Système à pile à combustible selon la revendication 16,
le boîtier (8) étant réalisé sous forme d'un boîtier axial.

18. Système à pile à combustible selon l'une quelconque des revendications précédentes,
la pile à combustible (1) étant une pile à combustible à membrane d'échange de protons.

19. Utilisation d'un système à pile à combustible selon l'une quelconque des revendications 1 à 18 dans un aéronef.

20. Aéronef équipé d'un système à pile à combustible selon l'une quelconque des revendications 1 à 18.
